# EUROPÄISCHE PATENTSCHRIFT

(11) **EP 2 955 808 B1**
(45) Veröffentlichungstag und Bekanntmachung des Hinweises auf die Patenterteilung: **08.08.2018**
(21) Anmeldenummer: 14172445.0
(22) Anmeldetag: 13.06.2014
(51) Int. Cl.: H02J 3/18, H02P 9/00

(54) **Verfahren zur Regelung einer Windenergieanlage während eines asymmetrischen Netzfehlers**
Method for controlling a wind energy turbine during an asymmetric network fault
Procédé de régulation d'une éolienne pendant une défaillance réseau asymétrique

(43) Veröffentlichungstag der Anmeldung: 16.12.2015
(73) Patentinhaber: Nordex Energy GmbH, 22419 Hamburg (DE)
(72) Erfinder: WESSEL Christian, DE - 20357 Hamburg (DE)
(74) Vertreter: Hauck Patentanwaltspartnerschaft mbB

(56) Entgegenhaltungen:
- EP-A2- 1 919 055
- WO-A1-2010/028689
- DE-A1-102006 054 870
- DE-A1-102007 005 165
- DE-A1-102008 017 715
- DE-A1-102008 034 532
- DE-A1-102011 000 459
- US-A1- 2013 170 254

## Beschreibung

Die vorliegende Erfindung betrifft ein Verfahren zur Regelung einer an ein dreiphasiges elektrisches Versorgungsnetz angeschlossenen Windenergieanlage während eines asymmetrischen Netzfehlers. Insbesondere ist das Verfahren für Windenergieanlagen mit einem doppelt gespeisten Asynchrongenerator ausgelegt. Ein gattungsgemäßes Verfahren ist beispielsweise aus dem Dokument DE 10 2008 034 532 A1 als bekannt zu entnehmen. Ein asymmetrischer Netzfehler liegt vor, wenn mindestens die Amplitude einer elektrischen Größe in einer Phase des Netzes vom Nennwert abweicht. Ursache für einen asymmetrischen Netzfehler kann beispielsweise ein Kurzschluss auf der entsprechenden Phase sein. Nach der Methode der symmetrischen Komponenten ist ein asymmetrischer Netzfehler durch das Auftreten von Null verschiedener Komponenten im Gegensystem definiert. Bei der Methode der symmetrischen Komponenten wird ein dreiphasiges System in ein zweiphasiges System transformiert, wobei ein erster Phasor dem Mitsystem und ein zweiter Phasor dem Gegensystem entspricht. Die Phasoren enthalten in ihrem Real- und Imaginärteil die Wirk- und Blindleistungsanteile des jeweiligen Systems. Die Größe der Komponenten charakterisiert die Asymmetrie und erlaubt eine Klassifikation des aufgetretenen Fehlers und somit eine Fehlerbehandlung.

Aus E VDE-AR-N 4120, Entwurf, November 2012 mit dem Titel "Technische Bedingungen für den Anschluss und Betrieb von Kundenanlagen an das Hochspannungsnetz (TAB Hochspannung)" ist eine Spannungsstützung bei Netzfehlern durch Blindstromeinspeisung bekannt. In Kapitel 10.2.3.2 wird erläutert, dass bei einem Auftreten von sprunghaften Spannungsabweichungen von ΔU ≥ ± 2,5 % U Erzeugungseinheiten die Spannung in dem Hochspannungsnetz durch eine Anpassung (Erhöhung oder Absenkung) des von den Erzeugungseinheiten in das Netz eingespeisten Blindstroms I_{B} durch die Einspeisung eines zusätzlichen Blindstroms ΔI_{B} stützen sollen. Bei ΔU < ± 2,5 % U gelten die Anforderungen einer statischen Spannungshaltung. Es wird näher erläutert, dass die Aufteilung der Blindstromabweichung ΔI_{B} auf ein Mit- und Gegensystem (Δi_{B1} und Δi_{B2}) entsprechend der Spannungsänderung im Mit- bzw. im Gegensystem zu erfolgen habe.

Aus DE 10 2006 054 870 A1 ist eine Windenergieanlage bekannt geworden, deren netzseitiger Umrichter eine Gegensystemregelung mit einem Phasensteuermodul aufweist. Das Phasensteuermodul ist dabei ausgebildet, um eine elektrische Größe des Gegensystems phasenspezifisch zu bestimmen. Damit kann der verfügbare Strom je nach Betriebssituation für Wirk- oder Blindleistung im Gegensystem vorgegeben werden. Die Phasensteuerung kann insbesondere bei unsymmetrischen Netzbedingungen für eine Stabilisierung des Netzes genutzt werden.

Aus DE 10 2008 034 532 A1 ist ein Verfahren zum Steuern eines Umrichters einer Windenergieanlage mit einem doppelt gespeisten Asynchrongenerator bekannt geworden. Die Windenergieanlage besitzt einen generatorseitigen und einen netzseitigen Umrichter. Es wird eine Änderung des von einem Umrichter abgegebenen Blindstroms erfasst und bei einer Abweichung von einem Sollwert der Sollwert für den von dem jeweils anderen Umrichter abzugebenden Blindstrom geändert. Die Regelung der beiden Umrichter ist also derart aufeinander abgestimmt, dass die Gesamtstromabgabe optimiert ist.

Aus Lie, Xu: "Coordinated Control of DFIG's Rotor and Grid Side Converters During Network Unbalance" IEEE Transactions on Power Electronics, Vol. 23, No. 3, May 2008 ist ein Regelungsverfahren für ein elektrisches Erzeugersystem mit einem doppelt gespeisten Asynchrongenerator bei einem Vorliegen einer asymmetrischen Netzspannung bekannt. Der rotorseitige Umrichter wird derart angesteuert, dass Drehmomentschwingungen bei Vorliegen einer asymmetrischen Spannung unterdrückt werden. Schwankungen der vom Stator in das Netz abgegebenen Wirkleistung werden durch eine Regelung der Wirkleistungsabgabe des netzseitigen Umrichters kompensiert, so dass das Erzeugersystem eine konstante Wirkleistung in das Netz einspeist. Dem Regelungsverfahren liegt dabei eine voneinander abhängige Regelung der Ströme im Mit- und im Gegensystem des rotorseitigen sowie des netzseitigen Umrichters zugrunde.

Der Erfindung liegt die Aufgabe zugrunde, ein Verfahren zur Regelung einer an ein elektrisches Versorgungsnetz angeschlossenen Windenergieanlage mit einem doppelt gespeisten Asynchrongenerator, während eines asymmetrischen Netzfehlers, anzugeben, mit dem in einfacher Weise ein zur Netzstützung erforderlicher Blindstrom bereitgestellt werden kann.

Erfindungsgemäß wird die Aufgabe durch ein Verfahren mit den Merkmalen des Anspruchs 1 gelöst. Vorteilhafte Ausgestaltungen des Verfahrens bilden den Gegenstand der Unteransprüche.

Das erfindungsgemäße Verfahren sieht eine Regelung einer an ein dreiphasiges, elektrisches Versorgungsnetz angeschlossenen Windenergieanlage während eines asymmetrischen Netzfehlers vor. Das Verfahren ist vorgesehen und bestimmt für eine Windenergieanlage mit einem doppelt gespeisten Asynchrongenerator, dessen Rotor über einen Wechselstrom-Umrichter, der einen rotorseitigen Umrichter, einen netzseitigen Umrichter und einen dazwischen liegenden Gleichstromzwischenkreis aufweist, wobei der Stator des Generators ebenfalls mit dem elektrischen Versorgungsnetz verbunden ist. Das Verfahren ist weiterhin vorgesehen und bestimmt für eine Windenergieanlage, deren Wechselstrom-Umrichter eine Regelungsvorrichtung umfasst, in welcher eine Kennlinie bereitgestellt ist, die für einen Istwert einer Netzspannung in einem Gegensystem einen Sollwert für einen einzuspeisenden Blindstrom in dem Gegensystem angibt. Das erfindungsgemäße Verfahren sieht folgende Schritte vor:
- Messen der Istwerte der Netzspannung in mindestens zwei Phasen,
- Transformieren der gemessenen Istwerte der Netzspannung in einen Istwert der Netzspannung in dem Gegensystem,
- Bestimmen eines Sollwertes für einen in das elektrische Versorgungsnetz einzuspeisenden Blindstrom in dem Gegensystem auf der Basis der bereitgestellten Kennlinie und dem Istwert der Netzspannung in dem Gegensystem.

Weiter erfolgt ein Aufteilen des bestimmten Sollwerts für den in das elektrische Versorgungsnetz einzuspeisenden Blindstrom auf den rotorseitigen und den netzseitigen Umrichter durch das Erzeugen eines Sollwertes für einen durch den rotorseitigen Umrichter bereitzustellenden Blindstromanteil und das Bestimmen eines Sollwertes für einen durch den netzseitigen Umrichter bereitzustellenden Blindstromanteil gemäß einer in der Regelungsvorrichtung bereitgestellten Aufteilungsvorschrift und ein Ansteuern des rotorseitigen Umrichters und des netzseitigen Umrichters zur Einspeisung eines Blindstroms entsprechend den aufgeteilten Sollwerten durch die Regelungsvorrichtung.

Bei dem erfindungsgemäßen Verfahren wird, abhängig von der Netzspannung der einzuspeisende Blindstrom in dem Gegensystem durch den netzseitigen und den rotorseitigen Umrichter abgestimmt aufeinander erzeugt. Weiterhin wird bei dem erfindungsgemäßen Verfahren der in das elektrische Versorgungsnetz einzuspeisende Blindstrom auf den rotorseitigen und netzseitigen Umrichter aufgeteilt. Hierdurch kann auch bei stark asymmetrischen Netzfehlern der einzuspeisende Blindstrom bereitgestellt werden und mit einfachen Mitteln eine zu starke Belastung des rotorseitigen Umrichters verhindert werden.

Bei dem erfindungsgemäßen Ansatz wird der netzseitige Umrichter dazu verwendet, um durch die Bereitstellung eines Blindstroms die Netzspannung zu beeinflussen und den rotorseitigen Umrichter zu entlasten. Bei Ansätzen aus dem Stand der Technik wurden der netzseitige Umrichter und dessen Blindstromeinspeisung stets dazu verwendet, Oszillationen in der Leistung zu glätten. Im Rahmen der Erfindung wird jedoch der netzseitige Umrichter gezielt dazu eingesetzt, um die Anforderungen für das Einspeisen eines Blindstroms im Gegensystem bei Vorliegen eines asymmetrischen Netzfehlers zu erfüllen. Die Kennlinie ist für das Verfahren derart vorgegeben, dass mit einer Einspeisung von Blindstrom im Gegensystem auf einen asymmetrischen Netzfehler reagiert wird, welcher durch den Istwert der Netzspannung im Gegensystem gekennzeichnet ist.

Das erfindungsgemäße Verfahren sieht als Aufteilungsvorschrift vor, dass der Sollwert für den durch den rotorseitigen Umrichter bereitzustellenden Blindstromanteil durch einen vordefinierten Maximalwert begrenzt wird.

In dem erfindungsgemäßen Verfahren sieht die Aufteilungsvorschrift vor, dem netzseitigen Umrichter bei dem Aufteilen des Sollwerts für den in das elektrische Versorgungsnetz einzuspeisenden Blindstrom im Gegensystem unterhalb des Maximalwertes für den durch den rotorseitigen Umrichter bereitzustellenden Blindstromanteil einen gegenüber dem Sollwert für den durch den rotorseitigen Umrichter bereitzustellenden Blindstromanteil geringeren Blindstromsollwert vorzugeben und dem rotorseitigen Umrichter den verbleibenden Sollwertanteil für den einzuspeisenden Blindstrom im Gegensystem zuzuweisen, so dass insgesamt ein dem Sollwert aus der Kennlinie entsprechender Blindstrom im Gegensystem in das elektrische Versorgungsnetz eingespeist wird. Der gegenüber dem Sollwert für den durch den rotorseitigen Umrichter bereitzustellenden

Blindstromanteil geringere Blindstromsollwert für den netzseitigen Umrichter kann beispielsweise wenige ein bis wenige 10 Prozent des Blindstromsollwerts für den rotorseitigen Umrichter betragen.

Erfindungsgemäß sieht die Aufteilungsvorschrift vor, für die elektrische Rotorgröße einen Istwert zu erfassen und mit einem vordefinierten Schwellwert für die elektrische Rotorgröße zu vergleichen. Wird bei dem Vergleich der Istwert der elektrischen Rotorgröße kleiner oder gleich dem vordefinierten Schwellwert für die elektrische Rotorgröße festgestellt, erfolgt die Aufteilung des Sollwertes für den in das elektrische Versorgungsnetz einzuspeisenden Blindstrom im Gegensystem so, dass entsprechend den Ausführungen zu den vorangegangenen Weiterführungen entweder lediglich Blindleistung durch den rotorseitigen Umrichter oder zu einem geringen Anteil auch durch den netzseitigen Umrichter bereitgestellt wird. Wird bei dem Vergleich der Istwert der elektrischen Rotorgröße größer dem vordefinierten Schwellwert für die elektrische Rotorgröße festgestellt, erfolgt eine Aufteilung des Sollwertes für den in das elektrische Versorgungsnetz einzuspeisenden Blindstrom im Gegensystem dahingehend, dass der Sollwert für den durch den netzseitigen Umrichter bereitzustellenden Blindstromanteil erhöht wird, um überhaupt einen Beitrag bzw. einen größeren Beitrag zu dem zu erzeugenden Blindstrom zu leisten. Bei diesem Schritt wird anhand der gemessenen elektrischen Rotorgröße eine Überlastung des rotorseitigen Umrichters vermieden, indem der Sollwert des bereitzustellenden Blindstromanteils des rotorseitigen Umrichters im Gegensystem in Abhängigkeit von der gemessenen elektrischen Rotorgröße und dem vordefinierten Schwellwert für die elektrische Rotorgröße bestimmt und für die Regelung des Systems aus rotorseitigem und netzseitigem Umrichter vorgegeben wird. Der Sollwert für den durch den rotorseitigen Umrichter bereitzustellenden Blindstromanteil wird oberhalb des vordefinierten Schwellwerts für die elektrische

Rotorgröße in geringerem Maße erhöht, als unterhalb des vordefinierten Schwellwerts, während der Sollwert des bereitzustellenden Blindstromanteils des netzseitigen Umrichters so erhöht wird, dass sie Summe aus beiden Sollwerten dem Sollwert für den in das elektrische Versorgungsnetz einzuspeisenden Blindstrom im Gegensystem entspricht. Entsprechend einer der vorangestellt erläuterten Ausgestaltungen ist auch in dieser Aufteilungsvorschrift vorgesehen, dass der Sollwert für den durch den rotorseitigen Umrichter bereitzustellenden Blindstromanteil durch einen vordefinierten Maximalwert begrenzt wird. Erreicht der durch den rotorseitigen Umrichter bereitzustellenden Blindstromanteil den vordefinierten Maximalwert, wird dieser bei einem höheren netzseitigen Blindleistungsbedarf nicht weiter erhöht, sondern über den netzseitigen Umrichter bereitgestellt. Der Sollwert des bereitzustellenden Blindstromanteils des rotorseitigen Umrichters kann somit auf einen Maximalwert begrenzt werden, während die Belastung des rotorseitigen Umrichters bereits oberhalb eines Schwellwertes reduziert werden kann.

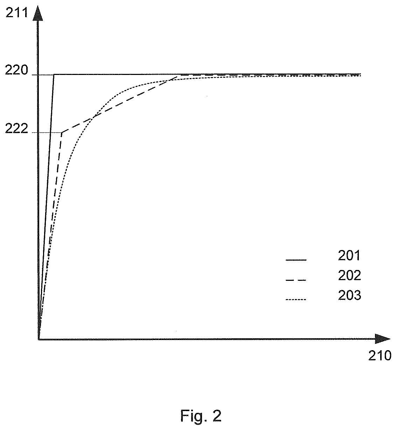

In einer weiteren bevorzugten Ausgestaltung des erfindungsgemäßen Verfahrens sieht die Aufteilungsvorschrift vor, die Aufteilung des Sollwertes für den in das elektrische Versorgungsnetz einzuspeisenden Blindstrom im Gegensystem auf die Sollwertanteile für den rotorseitigen und den netzseitigen Umrichter auf Basis einer vorgegebenen Zuordnungsvorschrift, wie beispielsweise einer mathematischen Funktion oder einer vergleichbaren Vorschrift, vorzunehmen. Beispielsweise kann eine Sollwertfunktion Îᵣₒₜₒᵣ (x) für den rotorseitigen Blindstromanteil vorgegeben werden, wobei x die überwachte elektrische Rotorgröße darstellt. Der Sollwert Î_{grid} (x) für den durch den netzseitigen Umrichter bereitzustellenden Blindstromanteil kann dann in Abhängigkeit von der überwachten elektrische Rotorgröße und dem Sollwert für den in das elektrische Versorgungsnetz einzuspeisenden Blindstrom im Gegensystem Îₜₒₜₐₗ als Differenz aus Î_{grid} (x) = Îₜₒₜₐₗ - Îᵣₒₜₒᵣ (x) bestimmt werden. Die Sollwertfunktion Îᵣₒₜₒᵣ (x) kann so gewählt werden, dass Îᵣₒₜₒᵣ (x) mit steigendem x bezogen auf Î_{grid} (x) zunächst überproportional stark ansteigt (siehe Fig. 2, Verlauf 203), dann jedoch in einen asymptotischen Verlauf übergeht, mit welchem sich die Funktion Îᵣₒₜₒᵣ (x) mit steigendem x dem Maximalwert für den rotorseitigen Blindstromanteil annähert. Bevorzugt führt die Aufteilungsvorschrift den Sollwertanteil für den rotorseitigen Umrichter, abhängig von der elektrischen Rotorgröße, asymptotisch mit ansteigender Rotorgröße an den Maximalwert heran. Grundsätzlich können bei der Verwendung solcher Sollwertfunktionen auch weitere überwachte Kenngrößen oder Zustände des rotorseitigen Umrichters als Parameter berücksichtigt werden. Alternativ zur Verwendung einer mathematischen Funktion kann ein Kennlinienfeld (z.B. über die Vorgabe von Wertepaaren) als Zuordnungsvorschrift angegeben werden, nach welcher die Aufteilung des Blindstroms auf den rotor- und den netzseitigen Umrichter erfolgt. Das Kennlinienfeld kann beispielsweise Sollwerte für die durch den rotorseitigen und den netzseitigen Umrichter bereitzustellenden Blindstromanteile in Abhängigkeit von dem Sollwert des Blindstroms im Gegensystem umfassen. Die hinterlegten Kennlinien sind dabei so zu wählen, dass sichergestellt ist, dass das Maximum der elektrischen Rotorgröße nicht überschritten wird und der Sollwert für den in das elektrische Versorgungsnetz einzuspeisenden Blindstrom im Gegensystem erreicht wird. Die Kennlinienfelder können beispielsweise auf der Basis von in einem Versuch ermittelten Daten festgelegt werden.

Bei der Ermittlung des Blindstromsollwerts für den rotorseitigen Umrichter wird berücksichtigt, dass der rotorseitig beeinflussbare Blindstrom zwischen dem Stator des Generators und dem elektrischen Versorgungsnetz ausgetauscht wird. Entsprechend wird der Blindstromsollwert für den rotorseitigen Umrichter unter Berücksichtigung des Übersetzungsverhältnisses, der Phasenlage sowie des Drehzahlschlupfes des Rotors des Generators berechnet. Die Umrechnung von Statorgrößen in Rotorgrößen ist im Stand der Technik bekannt und wird daher nicht weiter detailliert. Die für die Umrechnung benötigten Größen, wie zum Beispiel die Drehzahl der Rotors des Generators oder die Netzfrequenz, werden erfasst und liegen als Eingangsgrößen an der Regelungsvorrichtung an oder sind als Parameter, wie zum Beispiel die Haupt- und Streuinduktivität, in der Regelungsvorrichtung hinterlegt und stehen somit für die Umrechnung zur Verfügung.

Die ermittelten Blindstromsollwerte für den rotorseitigen und den netzseitigen Umrichter sowie die entsprechenden Istwerte liegen an Stromreglern an, welche eingerichtet sind, basierend auf den anliegenden Größen Sollwerte für eine Modulation bereitzustellen. Bei der erfindungsgemäßen Weiterbildung des Verfahrens wird auf bekannte Stromregler der Umrichter zurückgegriffen, die Sollwerte als Eingangsgrößen für eine Modulation bereitstellen. Als Modulationsverfahren kommen beispielsweise Pulsweitenmodulation oder Raumzeigermodulation in Frage.

In einer bevorzugten Ausgestaltung ist die elektrische Rotorgröße ein Rotorstrom. Alternativ kann als elektrische Rotorgröße auch eine Rotorspannung vorgesehen werden. Die entsprechenden Rotorkreisgrößen werden erfasst und liegen an der Regelungsvorrichtung als Eingangsgrößen an. Für die Überwachung eignen sich insbesondere Scheitel- oder Effektivwerte des Rotorstroms oder der Rotorspannung. In einer bevorzugten Ausgestaltung wird die zur Überwachung des rotorseitigen Umrichters vorgesehene elektrische Rotorgröße in die symmetrische Darstellung transformiert und für die Regelung bereitgestellt. Schwellwerte und/oder Maximalwerte für die elektrische Rotorgröße bzw. den Sollwert für den durch den rotorseitigen Umrichter bereitzustellenden Blindstromanteil können beispielsweise auf der Basis von in einem Versuch ermittelten Daten ermittelt und in der Regelungsvorrichtung hinterlegt werden.

Die erfindungsgemäße Aufgabe wird ebenfalls durch eine Windenergieanlage zur Einspeisung in ein dreiphasiges, elektrisches Versorgungsnetz gelöst. Die erfindungsgemäße Windenergieanlage besitzt einen doppeltgespeisten Asynchrongenerator, dessen Rotor über einen Wechselstrom-Umrichter mit dem elektrischen Versorgungsnetz und dessen Stator mit dem elektrischen Versorgungsnetz verbunden ist. Der Wechselstrom-Umrichter weist einen rotorseitigen Umrichter und einen netzseitigen Umrichter auf. Ferner besitzt der Wechselstrom-Umrichter eine Regelungsvorrichtung, in der eine Kennlinie bereitgestellt ist, die für einen Istwert einer Netzspannung in einem Gegensystem einen Sollwert für einen einzuspeisenden Blindstrom in dem Gegensystem angibt. Die erfindungsgemäße Windenergieanlage weist eine Messvorrichtung, die eingerichtet ist, Istwerte der Netzspannung wenigstens zweier Phasen des elektrischen Versorgungsnetzes zu erfassen und der Regelungsvorrichtung als Eingangsgrößen bereitzustellen. Die Regelungsvorrichtung weist ferner ein Transformationsmodul auf, das eingerichtet ist, die anliegenden Istwerte der Netzspannung in einen Istwert der Netzspannung im Gegensystem zu transformieren. Zudem ist die Regelungsvorrichtung eingerichtet, um, ansprechend auf den anliegenden Istwert der Netzspannung im Gegensystem, auf Basis der Kennlinie, einen Sollwert für einen in das elektrische Versorgungsnetz einzuspeisenden Blindstrom im Gegensystem zu bestimmen. Die Regelungsvorrichtung der erfindungsgemäßen Windenergieanlage weist zudem ein Sollwertmodul auf, das eingerichtet ist, in Abhängigkeit von einer in der Regelungsvorrichtung bereitgestellten Aufteilungsvorschrift, ansprechend auf den Sollwert des einzuspeisenden Blindstroms im Gegensystem, einen Sollwert für den durch den rotorseitigen Umrichter bereitzustellenden Blindstromanteil und einen Sollwert für den durch den netzseitigen Umrichter bereitzustellenden Blindstromanteil zu ermitteln. Weiterhin weist die Regelungsvorrichtung der erfindungsgemäßen Windenergieanlage Stromregler für den rotorseitigen und den netzseitigen Umrichter auf, an welchen der jeweilige Sollwert für den einzuspeisenden Blindstromanteil anliegt, und welche eingerichtet sind, den rotorseitigen und den netzseitigen Umrichter zur Einspeisung eines entsprechenden Blindstroms anzusteuern. Bevorzugt ist die erfindungsgemäße Windenergieanlage ausgebildet, um nach dem erfindungsgemäßen Verfahren betrieben zu werden.

Ein Ausführungsbeispiel mit mehreren Varianten wird nachfolgend anhand der Figuren näher erläutert. Es zeigen:
- Fig. 1: ein schematisches Diagramm einer Windenergieanlage und
- Fig. 2: drei Varianten für die Aufteilung des Blindstromsollwerts.

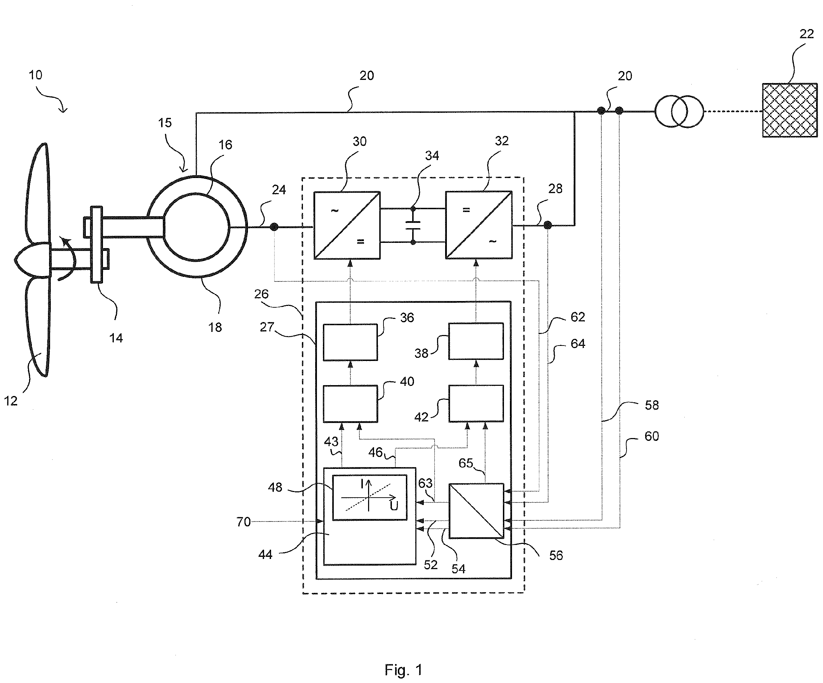

Die Fig. 1 zeigt in einer schematischen Ansicht eine Windenergieanlage 10, deren Rotor 12 ein Drehmoment aus dem Wind aufnimmt und über einen Antriebsstrang 14, der ein Getriebe umfasst, an den Rotor des Generators 16 eines doppelt gespeisten Asynchrongenerators 15 weiterleitet, welcher eingerichtet ist, die aufgenommene kinetische Energie in elektrische Energie umzuwandeln und in ein dreiphasiges elektrisches Versorgungsnetz 22 einzuspeisen. Der Stator des Generators 18 ist über eine dreiphasige Leitung 20 mit dem dreiphasigen elektrischen Versorgungsnetz 22 verbunden. Der Rotor des Generators 16 ist über eine dreiphasige Leitung 24 mit einem Wechselstrom-Umrichter 26 verbunden. Der Wechselstrom-Umrichter 26 ist netzseitig über eine dreiphasige Leitung 28 mit den Statorleitungen 20 und dem elektrischen Versorgungsnetz 22 verbunden. Zur besseren Übersicht werden elektrische Leitungen in der Figur schematisch einphasig dargestellt.

Der Wechselstrom-Umrichter 26 weist einen rotorseitigen Umrichter 30 und einen netzseitigen Umrichter 32 auf. Zwischen den Umrichtern ist ein Gleichstromzwischenkreis 34 vorgesehen. Der Wechselstrom-Umrichter 26 verfügt weiterhin über eine Regelungsvorrichtung 27, die dazu eingerichtet ist, den Betrieb der Umrichter 30, 32 in Abhängigkeit von verschiedenen an der Regelungsvorrichtung 27 anliegenden Eingangsgrößen 58, 60, 62, 64, 70 sowie in einer Speichervorrichtung (nicht dargestellt) der Regelungsvorrichtung 27 hinterlegten Parametern und/oder Zuordnungsvorschriften zu regeln. Die Regelungsvorrichtung 27 ist zur Durchführung des erfindungsgemäßen Verfahrens eingerichtet, eine in der Regelungsvorrichtung 27 gespeicherte Regelungssoftware auszuführen. Zur Veranschaulichung der für die Erfindung relevanten Verfahrensschritte werden in der Fig. 1 einzelne wesentliche Elemente des erfindungsgemäßen Regelungsverfahrens dargestellt. Die einzelnen Elemente der können entweder als Softwaremodule der Regelungssoftware oder als separate Vorrichtungen, die eingerichtet sind, einen bestimmten Verfahrensschritt des Regelungsverfahrens auszuführen, aufgefasst werden.

Eine Regelungsvorrichtung, mittels derer der Betrieb der Windenergieanlage geregelt wird, ist zur besseren Übersicht nicht dargestellt. Es ist jedoch denkbar, dass Teile des erfindungsgemäßen Verfahrens in einer solchen Regelungsvorrichtung realisiert werden und diese beispielsweise einen Sollwert für eine bereitzustellende Blindleistung im Gegensystem in Abhängigkeit von der Netzspannung ermittelt und der Regelungsvorrichtung 27 des Wechselstrom-Umrichters 26 als Sollwert vorgibt.

Die Umrichter 30, 32 werden mittels Stromreglern 40, 42 gesteuert, wobei die von den Stromreglern 40, 42 ermittelten Sollwerte in nachfolgenden Schritten 36 bzw. 38, beispielweise mittels Pulsweitenmodulation, moduliert werden. An den Stromreglern 40,42 liegen Sollwerte 43 bzw. 46 sowie Istwerte 63 bzw. 65 für die Steuerung des rotorseitigen Umrichters 30 bzw. des netzseitigen Umrichters 32 an. Die Sollwerte 43, 46 werden durch ein Sollwertmodul 44 bereitgestellt.

An der Regelungsvorrichtung 27 liegen als Eingangsgrößen die netzseitig gemessenen Spannungen 58 und die netzseitig gemessenen Ströme 60 an. Weiterhin liegen auch die in der dreiphasigen Leitung 24 zwischen dem Rotor des Generators 16 und dem rotorseitigen Umrichter 30 gemessenen Ströme (kurz: eingangsseitig gemessene Ströme) 62 und die in der dreiphasigen Leitung 28 auf der Ausgangseite des netzseitigen Umrichters 32 gemessenen Ströme (kurz: ausgangsseitig gemessene Ströme) 64 als Eingangsgrößen an der Umrichterregelungsvorrichtung 27 an. Die in der Beschreibung verwendete Mehrzahl ist in der phasenabhängigen Messung und Verarbeitung der Eingangsgrößen begründet. Der Begriff netzseitig gemessenen Spannungen 58 ist also so zu verstehen, dass beispielsweise mit den Eingangsgrößen eine Information über den Wert der Spannungen aller drei Phasen des hier beschriebenen dreiphasigen Systems an der Regelungsvorrichtung 27 anliegt. Alternativ kann für dreiphasige Systeme ohne Null-Leiter die dritte Phase aus einer Information über die Spannungen der anderen beiden Phasen berechnet werden, so dass für dieses Beispiel mit den netzseitig gemessenen Spannungen 58 nur zwei Messwerte an der Regelungsvorrichtung 27 anliegen und die Umrichterregelungsvorrichtung 27 die Spannung auf der verbliebenden Phase berechnet. Die an der Regelungsvorrichtung 27 anliegenden Eingangsgrößen 58, 60, 62, 64 werden durch geeignete Sensoren gemessen, welche die Größen an den elektrischen Leitungen 20, 24, 28 erfassen und an die Regelungsvorrichtung 27 übermitteln bzw. der Regelungsvorrichtung 27 als Eingangsgrößen bereitstellen. Als Messvorrichtungen, in Fig. 1 schematisch als Punkte dargestellt, können beispielsweise kontaktlose Sensoren eingesetzt werden.

Die Regelungsvorrichtung 27 verfügt über ein Transformationsmodul 56, welches dazu eingerichtet ist, die Eingangsgrößen 58, 60, 62, 64, Spannungen und Ströme der einzelnen Phasen, mathematisch in entsprechende symmetrischen Komponenten, also Spannungen und Ströme im Mitsystem und im Gegensystem zu transformieren. An dem Transformationsmodul 56 liegen dazu die netzseitig gemessenen Spannungen 58, die netzseitig gemessenen Ströme 60, sowie die eingangsseitig gemessenen Ströme 62 und die ausgangsseitig gemessenen Ströme 64 als Eingangsgrößen an. Das Transformationsmodul 56 berechnet entsprechend einer in dem Transformationsmodul 56 hinterlegten mathematischen Vorschrift aus den netzseitig gemessenen Spannungen 58 den entsprechenden Istwert der netzseitigen Spannung im Gegensystem 52, aus den netzseitig gemessenen Strömen 60 den entsprechenden Istwert des netzseitigen Stroms im Gegensystem 54, sowie aus den eingangsseitig gemessene Strömen 62 die Istwerte der eingangsseitigen Ströme im Mit- und Gegensystem 63 und aus den ausgangsseitig gemessene Strömen 64 die Istwerte der ausgangsseitigen Ströme im Mit- und Gegensystem 65. Der Istwert der netzseitigen Spannung im Gegensystem 52 und der Istwert des netzseitigen Stroms im Gegensystem 54 werden von dem Transformationsmodul 56 an das Sollwertmodul 44 übermittelt bzw. diesem für die Verarbeitung bereitgestellt. Es sei vermerkt, dass der Istwert des netzseitigen Stroms im Gegensystem 54 neben einer Wirkstromkomponente einen Blindstromanteil aufweisen kann. In dem hier beschriebenen Ausführungsbeispiel werden die Istwerte der eingangsseitigen Ströme im Mit- und Gegensystem 63 bzw. die Istwerte der ausgangsseitigen Ströme im Mit- und Gegensystem 65 an die Stromregler 40 bzw. 42 übermittelt bzw. diesen für die Verarbeitung bereitgestellt. Weiterhin werden die Istwerte 63, an das Sollwertmodul 44 übermittelt bzw. diesem für die Verarbeitung bereitgestellt.

In dem Sollwertmodul 44 ist eine Kennlinie 48 vorgegeben, mittels welcher Istwerten der netzseitigen Spannung im Gegensystem 52 Sollwerte für einen in das elektrische Versorgungsnetz bereitzustellenden Blindstrom im Gegensystem zuordnet sind. Das Sollwertmodul 44 ist eingerichtet, aus der Kennlinie 48 und einem Istwert für die netzseitige Spannung im Gegensystem 52 einen solchen Sollwert für den in das elektrische Versorgungsnetz bereitzustellenden Blindstrom im Gegensystem zu ermitteln. Das Sollwertmodul 44 ist weiterhin eingerichtet, auf Basis der Istwerte der netzseitigen Spannung im Gegensystem 52 einen asymmetrischen Netzfehler zu festzustellen. Dies kann beispielsweise direkt über die Kennlinie 48 erfolgen.

Das Sollwertmodul 44 ist weiterhin eingerichtet, aus dem aus der Kennlinie ermittelten Sollwert für den in das elektrische Versorgungsnetz bereitzustellenden Blindstrom im Gegensystem anteilige Sollwerte 43 bzw. 46 zu ermitteln, mittels derer die anteilige Bereitstellung von Blindleistung durch den rotorseitigen Umrichter 30 bzw. den netzseitigen Umrichter 32 geregelt werden kann. Dazu ist in dem Sollwertmodul 44 eine Aufteilungsvorschrift bereitgestellt, bzw. kann das Sollwertmodul 44 auf eine in der Speichervorrichtung bereitgestellte Aufteilungsvorschrift zugreifen.

Bei der Umrechnung durch das Sollwertmodul 44 ist zu berücksichtigen, dass eine doppelte Speisung des Generators 15 erfolgt und die erfassten elektrischen Größen 58, 60 also eine Überlagerung aus elektrischen Größen des Rotorkreises und des Statorkreises sind. Das Sollwertmodul 44 ist daher eingerichtet, auf den Statorkreis bezogene Größen in auf den Rotorkreis bezogene Größen umzurechnen. Insbesondere ist das Sollwertmodul 44 dazu eingerichtet, die anteiligen Sollwerte 43 und 46 so zu berechnen, dass bei einer entsprechenden Ansteuerung des rotor- und des netzseitigen Umrichters 30, 32 mit diesen Sollwerten, der in das elektrische Versorgungsnetz bereitzustellende Blindstrom bereitgestellt werden kann. Der auf den Rotorkreis bezogene Blindstromsollwert 43 wird so bestimmt, dass der diesem entsprechende Blindstrom, der von dem Stator 18 über die Leitung 20 mit dem elektrischen Versorgungsnetz 22 ausgetauscht wird, und der Blindstrom der zwischen dem netzseitigen Umrichter 32 über die Leitung 28 mit dem elektrischen Versorgungsnetz 22 ausgetauscht wird, in Summe dem ermittelten Sollwert für den in das elektrische Versorgungsnetz bereitzustellenden Blindstrom entsprechen. Für die Durchführung der Umrechnung liegen an dem Sollwertmodul 44 eine oder mehrere weitere Eingangsgrößen 70 an. Bei den weiteren Eingangsgrößen 70 handelt es sich beispielsweise um eine erfasste Drehzahl des Rotors des Generators und/oder eine erfasste Netzfrequenz. Weitere für die Umrechnung benötigte Parameter, wie zum Beispiel die Haupt- und Streuinduktivität des Generators können beispielsweise durch das Sollwertmodul 44 aus der Speichervorrichtung abgerufen werden.

Neben den anteiligen Sollwerten 43 bzw. 46, welche durch das Sollwertmodul 44 ermittelt werden, liegen an den Stromreglern 40 bzw. 42 als weitere Eingangsgrößen die Istwerte der eingangsseitigen Ströme im Mit- und Gegensystem 63 bzw. die Istwerte der ausgangsseitigen Ströme im Mit- und Gegensystem 65 an. Die Stromregler 40, 42 sind eingerichtet, auf Basis dieser Größen, Sollwerte als Eingangsgrößen für den nachfolgenden Schritt der Pulsweitenmodulation für die Module 36 bzw. 38 bereitzustellen.

Fig. 2 zeigt drei Varianten für die Aufteilung des in das elektrische Versorgungsnetz einzuspeisenden Blindstromsollwerts auf die über den rotorseitigen Umrichter und über den netzseitigen Umrichter bereitzustellenden Blindstromanteile. Zur Vereinfachung des Sachverhalts wird in der Fig. 2 davon ausgegangen, dass die gegeneinander aufgetragenen Größen den Zusammenhang zwischen Rotor- und Statorgrößen berücksichtigen.

Fig. 2 zeigt drei beispielhafte Verläufe 201, 202, 203 für die Sollwerte der bereitzustellenden Blindstromanteile des rotor- bzw. des netzseitigen Umrichters 210 bzw. 211 im Gegensystem, welche gegeneinander aufgetragen sind. Bei der mit einer durchgezogenen Linie dargestellten Variante 201 wird, in Abhängigkeit von dem entsprechend der Kennlinie ermittelten, in das elektrische Versorgungsnetz einzuspeisenden Blindstrom, der Blindstromanteil des rotorseitigen Umrichters 211 im Gegensystem ohne nennenswerten bzw. einem geringen Blindstromanteil des netzseitigen Umrichters 210 bis zu einem Maximalwert 220 erhöht. Ist über diesen Wert hinaus die Einspeisung einer höheren Blindleistung in das elektrische Versorgungsnetz erforderlich, wird der Blindstromanteil des rotorseitigen Umrichters 211 auf dem Maximalwert 220 konstant gehalten, und im Weiteren nur noch der Sollwert für den netzseitigen Umrichter 210 erhöht.

Die gestrichelt dargestellten Variante 202 kennt einen Schwellwert 222 für den Blindstromanteil des rotorseitigen Umrichters 211. Bis zum Erreichen des Schwellwerts 222 findet nur eine geringe Erhöhung des Blindstromanteils des netzseitigen Umrichters 210 statt. Übersteigt der Sollwert für den in das elektrische Versorgungsnetz einzuspeisenden Blindstrom den Schwellwert 222, wird bis zum Erreichen eines Maximalwerts 220 für den rotorseitig bereitgestellten Blindstromanteil anteilig sowohl der Sollwertanteil für den rotorseitigen 211 wie auch für den netzseitigen Umrichter 210 erhöht. Erreicht der rotorseitige Blindstromanteil den Maximalwert 220, wird, sofern zusätzliche Blindleistung in das elektrische Versorgungsnetz eingespeist werden soll, nur der Sollwertanteil für den netzseitigen Umrichter 210 erhöht.

Eine dritte Variante 203, die in Fig. 2 punktiert dargestellt ist, zeigt eine stetige Zunahme des von dem netzseitigen Umrichter erzeugten Blindstromanteils 210 unter gleichzeitiger Erhöhung des Blindstromanteils des rotorseitigen Umrichters 211. Wie in Variante 203 zu erkennen ist, wird der Blindstromanteil des rotorseitigen Umrichters 211 zunächst stärker erhöht als der Blindstromanteil des netzseitigen Umrichters 210. Ist die Einspeisung einer höheren Blindleistung in das elektrische Versorgungsnetz erforderlich, wird im weiteren Verlauf primär der Sollwert für den netzseitigen Umrichter 210 erhöht, während der Sollwert für den rotorseitigen Umrichter 211 nur noch geringfügig erhöht wird und sich asymptotisch an den Maximalwert 220 annähert.

Grundsätzlich möglich sind auch andere Aufteilungsvorschriften als die in Fig. 2 dargestellten Varianten. Bei einer anderen Aufteilungsvorschrift, die den netzseitigen Umrichter gleichwertig oder stärker als bei den vorstehenden Varianten belasten würde, können jedoch Anpassungen im Aufbau des Wechselstrom-Umrichters, beispielsweise bei der Auslegung der Netzdrossel des netzseitigen Umrichters, notwendig werden, welche zu Mehrkosten führen können.

### Bezugszeichenliste

- 10: Windenergieanlage
- 12: Rotor
- 14: Antriebsstrang
- 15: doppelt gespeister Asynchrongenerator
- 16: Rotor des Generators
- 18: Stator des Generators
- 20: dreiphasige Leitung
- 22: elektrisches Versorgungsnetz
- 24: dreiphasige Leitung
- 26: Wechselstrom-Umrichter
- 27: Regelungsvorrichtung
- 28: dreiphasige Leitung
- 30: rotorseitiger Umrichter
- 32: netzseitiger Umrichter
- 34: Gleichstromzwischenkreis
- 36: Modulation
- 38: Modulation
- 40: Stromregler
- 42: Stromregler
- 44: Sollwertmodul
- 43: Sollwert für den durch den rotorseitigen Umrichter bereitzustellenden Blindstromanteil
- 46: Sollwert für den durch den netzseitigen Umrichter bereitzustellenden Blindstromanteil
- 48: Kennlinie
- 52: Istwert der netzseitigen Spannung im Gegensystem
- 54: Istwert des netzseitigen Stroms im Gegensystem
- 56: Transformationsmodul
- 58: netzseitig gemessene Spannungen
- 60: netzseitig gemessene Ströme
- 62: eingangsseitig gemessene Ströme
- 63: Istwerte der eingangsseitigen Ströme im Mit- und Gegensystem
- 64: ausgangsseitig gemessene Ströme
- 65: Istwerte der ausgangsseitigen Ströme im Mit- und Gegensystem
- 70: weitere Eingangsgrößen

## Patentansprüche

1. Verfahren zur Regelung einer an ein dreiphasiges, elektrisches Versorgungsnetz (22) angeschlossenen Windenergieanlage (10) während eines asymmetrischen Netzfehlers, wobei die Windenergieanlage (10) einen doppelt gespeisten Asynchrongenerator (15) aufweist, dessen Rotor (16) über einen Wechselstrom-Umrichter (26) mit dem elektrischen Versorgungsnetz (22) und dessen Stator (18) mit dem elektrischen Versorgungsnetz (22) verbunden ist, wobei der Wechselstrom-Umrichter (26) einen rotorseitigen Umrichter (30), einen netzseitigen Umrichter (32) und eine Regelungsvorrichtung (27) aufweist, in welcher eine Kennlinie (48) bereitgestellt ist, die für einen Istwert einer Netzspannung in einem Gegensystem (52) einen Sollwert für einen einzuspeisenden Blindstrom in dem Gegensystem angibt, **gekennzeichnet durch** die folgenden Schritte:
- Messen der Istwerte der Netzspannung (58) in mindestens zwei Phasen,
- Transformieren der gemessenen Istwerte der Netzspannung (58) in einen Istwert der Netzspannung (52) in dem Gegensystem,
- Bestimmen eines Sollwerts für einen in das elektrische Versorgungsnetz einzuspeisenden Blindstrom in dem Gegensystem auf Basis der bereitgestellten Kennlinie (48) und des Istwerts der Netzspannung in dem Gegensystem (52),
- Aufteilen des bestimmten Sollwerts für den in das elektrische Versorgungsnetz einzuspeisenden Blindstrom in dem Gegensystem auf den rotorseitigen und den netzseitigen Umrichter (30, 32) durch Bestimmen eines Sollwertes für einen durch den rotorseitigen Umrichter bereitzustellenden Blindstromanteil (43) und eines Sollwertes für einen durch den netzseitigen Umrichter bereitzustellenden Blindstromanteil (46) gemäß einer in der Regelungsvorrichtung (27) bereitgestellten Aufteilungsvorschrift, und
- Ansteuern des rotorseitigen Umrichters (30) und des netzseitigen Umrichters (32) zur Einspeisung von Blindstrom entsprechend den aufgeteilten Sollwerten (43, 46),
**dadurch gekennzeichnet, dass**
- der Sollwert für den durch den rotorseitigen Umrichter bereitzustellenden Blindstromanteil (43) auf einen vordefinierten Maximalwert (220) begrenzt wird,
- bei dem Aufteilen des Sollwerts für den einzuspeisenden Blindstrom in dem Gegensystem unterhalb des vordefinierten Maximalwertes (220) dem netzseitigen Umrichter (32) ein gegenüber dem Sollwert für den durch den rotorseitigen Umrichter bereitzustellenden Blindstromanteil geringerer Sollwertanteil vorgegeben wird,
- ein erfasster Istwert für eine elektrische Rotorgröße mit einem vordefinierten Schwellwert für die elektrische Rotorgröße verglichen wird, und wenn der Istwert der elektrischen Rotorgröße größer dem vordefinierten Schwellwert für die elektrische Rotorgröße festgestellt wird, die Aufteilung des Sollwerts für den in das elektrische Versorgungsnetz einzuspeisenden Blindstrom in dem Gegensystem so erfolgt, dass der Sollwert für den durch rotorseitigen Umrichter bereitzustellenden Blindstromanteil oberhalb des vordefinierten Schwellwerts in geringerem Maße erhöht wird, als unterhalb des vordefinierten Schwellwerts.

2. Verfahren nach Anspruch 1, **dadurch gekennzeichnet, dass** die Aufteilungsvorschrift abhängig von der elektrischen Rotorgröße vorgegeben ist.

3. Verfahren nach Anspruch 2, **dadurch gekennzeichnet, dass** die Aufteilungsvorschrift eine mathematische Funktion umfasst.

4. Verfahren nach Anspruch 3, **dadurch gekennzeichnet, dass** die Aufteilungsvorschrift den Sollwertanteil für den rotorseitigen Umrichter, abhängig von der elektrischen Rotorgröße asymptotisch an den Maximalwert heranführt.

5. Verfahren nach einem der Ansprüche 1 bis 4, **dadurch gekennzeichnet, dass** die Aufteilungsvorschrift ein Kennlinienfeld umfasst.

6. Verfahren nach einem der Ansprüche 1 bis 5, **dadurch gekennzeichnet, dass** die elektrische Rotorgröße ein Rotorstrom ist.

7. Verfahren nach einem der Ansprüche 1 bis 5, **dadurch gekennzeichnet, dass** die elektrische Rotorgröße eine Rotorspannung ist.

## Claims

1. A method for controlling a wind turbine (10) connected to a three-phase electric power grid (22) during an asymmetric grid fault, wherein the wind turbine (10) comprises a doubly-fed asynchronous generator (15), whose rotor (16) is connected to the electric power grid (22) via an AC converter (26) and whose stator (18) is connected to the electric power grid (22), wherein the AC converter (26) comprises a rotor side converter (30), a grid side converter (32) and a control device (27) provided with a characteristic curve (48) which indicates, for an actual value of the grid voltage in a negative-sequence system (52), a desired value for a reactive current to be fed in the negative system, **characterised by** the following steps:
• measuring the actual values of the grid voltage (58) in at least two phases,
• transforming the measured actual values of the grid voltage (58) into an actual value of the grid voltage (52) in the negative-sequence system,
• determining a desired value for a reactive current in the negative system to be fed into the power grid, based on the provided characteristic curve (48) and on the actual value of the grid voltage in the negative-sequence system (52),
• subdividing the determined desired value for the reactive current in the negative system to be fed into the power distribution network to the rotor side and the grid side converters (30, 32) by determining a desired value for a reactive current component (43) to be provided by the rotor side converter and a desired value for a reactive current component (46) to be provided by the grid side converter according to a subdivision rule provided in the control device (27), and
• controlling the rotor side converter (30) and the grid side converter (32) to feed reactive current corresponding to the subdivided desired values (43, 46),
**characterised in that**
• the desired value for the reactive current component (43) to be provided by the rotor side converter is limited to a pre-defined maximum value (220),
• when subdividing the desired value for the reactive current in the negative system to be fed below the pre-defined maximum value (220), a smaller desired value component is set for the grid side converter (32) with respect to the desired value for the reactive current component to be provided by the rotor side converter,
• a measured actual value for an electric rotor quantity is compared with a pre-defined threshold value for the electric rotor quantity, and if it is determined that the actual value of the electric rotor quantity is greater than the pre-defined threshold value for the electric rotor quantity, the subdivision of the desired value for the reactive current in the negative system to be fed into the power grid is performed such that the desired value for the reactive current component to be provided by the rotor side converter above the predefined threshold value is increased to a lesser degree than below the pre-defined threshold value.

2. The method according to claim 1, **characterised in that** the subdivision rule is set depending on the electric rotor quantity.

3. The method according to claim 2, **characterised in that** the subdivision rule comprises a mathematical function.

4. The method according to claim 3, **characterised in that** the subdivision rule brings the desired value component for the rotor side converter asymptotically to the maximum value, depending on the electric rotor quantity.

5. The method according to any one of the claims 1 to 4, **characterised in that** the subdivision rule comprises a set of characteristic curves.

6. The method according to any one of the claims 1 to 5, **characterised in that** the electric rotor quantity is a rotor current.

7. The method according to any one of the claims 1 to 5, **characterised in that** the electric rotor quantity is a rotor voltage.

## Revendications

1. Procédé de contrôle d'une éolienne (10) reliée à un réseau de distribution électrique (22) à trois phases pendant une erreur de réseau asymétrique, dans lequel l'éolienne (10) comporte un générateur asynchrone à double alimentation (15), dont le rotor (16) est relié au réseau de distribution électrique (22) à travers d'un convertisseur de courant alternatif (26) et dont le stator (18) est relié au réseau de distribution électrique (22), et dans lequel le convertisseur de courant alternatif (26) comporte un convertisseur côté rotor (30), un convertisseur côté réseau (32) et un dispositif de commande (27) dans lequel est prévu une courbe caractéristique (48) qui indique une valeur cible pour le courant réactif qu'on veut fournir dans un système inverse (52) pour une valeur réelle de la tension de réseau dans le système inverse, **caractérisé par** les étapes suivantes:
• mesurer les valeurs réelles de la tension du réseau (58) dans au moins deux phases,
• transformer les valeurs réelles mesurées de la tension du réseau (58) en une valeur réelle de la tension du réseau (52) dans le système inverse,
• déterminer une valeur cible pour le courant réactif qu'on veut fournir au réseau de distribution électrique dans le système inverse sur la base de la courbe caractéristique (48) prévue et sur la valeur réelle de la tension dans le système inverse (52),
• répartir la valeur cible pour le courant réactif qu'on veut fournir au réseau de distribution électrique dans le système inverse aux convertisseurs côté rotor et convertisseur coté réseau (30, 32) en déterminant une valeur cible de courant pour une part de courant réactif (43) à provisionner du convertisseur côté rotor et une valeur cible de courant pour une part de courant réactif (46) à provisionner du convertisseur côté réseau selon un règlement de répartition prévu dans le dispositif de commande (27), et
• commander le convertisseur côté rotor (30) et le convertisseur coté réseau (32) pour fournir du courant réactif correspondant aux valeurs cibles reparties (43, 46),
**caractérisé en ce que**
• la valeur cible pour la part de courant réactif (43) à fournir par le convertisseur côté rotor est délimitée à une valeur maximale prédéfinie (220),
• quand la valeur cible pour le courant réactif qu'on veut fournir au système inverse est repartie au-dessous de la valeur maximale prédéfinie (220), une part de valeur cible est établie pour le convertisseur coté réseau (32) qui est moins grande que la valeur cible pour la partie de courant réactif à fournir par le convertisseur côté rotor,
• une valeur réelle enregistrée pour une variable électrique du rotor est comparée avec une valeur de seuil prédéfinie pour la variable électrique du rotor, et quand il est relevé que la valeur réelle de la variable électrique du rotor est plus grande que la valeur de seuil prédéfinie pour la variable électrique du rotor, la répartition de la valeur cible pour le courant réactif dans le système inverse qu'on veut fournir au réseau de distribution électrique est faite de telle manière que la valeur cible pour la partie du courant réactif à fournir par le convertisseur côté rotor au-dessus de la valeur de seuil prédéfinie est augmentée dans une mesure plus petite qu'au dessous de la valeur de seuil prédéfinie.

2. Procédé selon la revendication 1, **caractérisé en ce que** la règle de répartition est prescrite en fonction de la variable électrique du rotor.

3. Procédé selon la revendication 2, **caractérisé en ce que** la règle de répartition comporte une fonction mathématique.

4. Procédé selon la revendication 3, **caractérisé en ce que** la règle de répartition approche la part de valeur cible pour le convertisseur côté rotor à la valeur maximale de façon asymptotique, en fonction de la variable électrique du rotor.

5. Procédé selon une des revendications 1 à 4, **caractérisé en ce que** la règle de répartition comporte un champ de courbes caractéristiques.

6. Procédé selon une des revendications 1 à 5, **caractérisé en ce que** la variable électrique du rotor est un courant de rotor.

7. Procédé selon une des revendications 1 à 5, **caractérisé en ce que** la variable électrique du rotor est une tension de rotor.
